# EUROPÄISCHE PATENTANMELDUNG

(11) **EP 4 530 611 A1**
(43) Veröffentlichungstag der Anmeldung: **02.04.2025**
(21) Anmeldenummer: 24181077.9
(22) Anmeldetag: 10.06.2024
(51) Int. Cl.: G01N 21/53, G08B 17/107

(54) **PARTIKELDETEKTIONSEINHEIT MIT INTEGRIERTEM LUFTSTROMSENSOR UND ANSAUGPARTIKELERKENNUNGSSYSTEM**

(30) Priorität: 28.09.2023 EP 23200490; 21.02.2024 EP 24158783; 12.03.2024 EP 24162936
(71) Anmelder: Wagner Group GmbH, 30853 Langenhagen (DE)
(72) Erfinder: Burkhardt, Lutz, 30165 Hannover (DE); Janz, Marcel, 30938 Großburgwedel (DE)
(74) Vertreter: Götz, Gudrun Veronika

(57) **Zusammenfassung**

Die Erfindung betrifft eine Partikeldetektionseinheit (100), ausgebildet zur Verwendung mit einem Ansaugpartikelerkennungssystem (200), wobei die Partikeldetektionseinheit (100) ein Gehäuse (110) aufweist, mit einer davon begrenzten und von Umgebungslicht abgeschirmten Detektionskammer (120), die einen Strömungseinlass (121) zum Eintritt einer Fluidströmung (F) in die Detektionskammer (120) und einen Strömungsauslass (122) zum Austritt der Fluidströmung (F) aus der Detektionskammer (120) umfasst, einen Lichtsender (130) und einen Lichtempfänger (140), die derart zueinander ausgerichtet sind, dass ein Detektionsbereich (DB) zur Detektion von in der Fluidströmung (F) enthaltenen Partikeln durch Überlagerung des von dem Lichtsender (130) gesendeten Lichts und des Einfallsbereichs des Lichtempfängers (140) innerhalb der Detektionskammer (120) definiert ist, sowie einen Luftstromsensor (160), der mindestens einen Drucksensor (150) sowie mindestens einen ersten Abschnitt (161),einen zweiten Abschnitt (162) und eine Querschnittsverengung umfasst, wobei der erste Abschnitt (161) des Luftstromsensors (160) eine erste Querschnittsfläche (A1) und der zweite Abschnitt (162) eine zweite Querschnittsfläche (A2) aufweist, und wobei der mindestens eine Drucksensor (150, 151, 152) zur Messung einer zwischen dem ersten und dem zweiten Abschnitt (161, 162) vorliegenden Druckdifferenz ausgebildet ist. Es ist die Aufgabe der Erfindung eine Partikeldetektionseinheit mit zuverlässiger, nichtinvasiver Überwachung der Fluidströmung, geringem Druckverlust, langen wartungsfreien Betriebszeiten und kompakter Bauweise bei geringen Herstellungskosten zu schaffen. Die Aufgabe wird gelöst, indem der Luftstromsensor (160) innerhalb der Detektionskammer (120) und in Strömungsrichtung der Fluidströmung (F) nach dem Strömungseinlass (121) sowie vor dem Strömungsauslass (122) angeordnet ist.

## Beschreibung

Die Erfindung betrifft eine Partikeldetektionseinheit, die zur Verwendung mit einem Ansaugpartikelerkennungssystem ausgebildet ist. Die Partikeldetektionseinheit weist ein Gehäuse auf, mit einer davon begrenzten und von Umgebungslicht abgeschirmten Detektionskammer, die einen Strömungseinlass zum Eintritt einer Fluidströmung in die Detektionskammer und einen Strömungsauslass zum Austritt der Fluidströmung aus der Detektionskammer umfasst, außerdem einen Lichtsender und einen Lichtempfänger, die derart zueinander ausgerichtet sind, dass ein Detektionsbereich zur Detektion von in der Fluidströmung enthaltenen Partikeln durch Überlagerung des von dem Lichtsender gesendeten Lichts und des Einfallsbereichs des Lichtempfängers innerhalb der Detektionskammer definiert ist, sowie einen Luftstromsensor, der mindestens einen Drucksensor sowie einen ersten Abschnitt, einen zweiten Abschnitt und eine Querschnittsverengung umfasst, wobei der erste Abschnitt eine erste Querschnittsfläche und der zweite Abschnitt eine zweite Querschnittsfläche aufweist, und wobei der mindestens eine Drucksensor zur Messung einer zwischen dem ersten und dem zweiten Abschnitt vorliegenden Druckdifferenz ausgebildet ist.

Die Erfindung betrifft außerdem ein Ansaugpartikelerkennungssystem insbesondere ein Ansaugbranderkennungssystem zum Erkennen eines Brandes und/oder einer Brandentstehung. Das Ansaugpartikelerkennungssystem weist ein Fluidleitungssystem mit mindestens einer Rohr- und/oder Schlauchleitung auf, die über eine oder mehrere Ansaugöffnungen zur jeweiligen Entnahme einer Fluidprobe in einen oder mehrere Überwachungsbereiche mündet, ein Strömungsmittel das zur Erzeugung einer Fluidströmung entlang der mindestens einen Rohr- und/oder Schlauchleitung fluidleitend mit dieser verbunden ist, mindestens eine Partikeldetektionseinheit, die zur Detektion von in der Fluidströmung enthaltenen Partikeln einen Lichtsender und einen Lichtempfänger, sowie eine von einem Gehäuse begrenzte Detektionskammer mit einem Strömungseinlass zum Eintritt der Fluidströmung in die Detektionskammer und einem Strömungsauslass zum Austritt der Fluidströmung aus der Detektionskammer aufweist, und einen Luftstromsensor, der mindestens einen Drucksensor sowie einen ersten Abschnitt, einen zweiten Abschnitt und eine Querschnittsverengung umfasst, wobei der erste Abschnitt eine erste Querschnittsfläche und der zweite Abschnitt eine zweite Querschnittsfläche aufweist, und wobei der mindestens eine Drucksensor zur Messung einer zwischen dem ersten und dem zweiten Abschnitt vorliegenden Druckdifferenz ausgebildet ist.

Partikeldetektionseinheiten werden oftmals für die Branderkennung, insbesondere in Gebäuden, Fahrzeugen, auf Schiffen usw. eingesetzt, wobei in der Umgebungsluft eines Überwachungsbereichs enthaltene Partikel, bspw. Rauchpartikel oder auch Aerosole, die auf einen Brand oder dessen Entstehung schließen lassen, mittels der Partikeldetektionseinheit erkannt werden. Bei einem Überwachungsbereich handelt es sich in der Regel um einen zu überwachenden Bereich, in dem sich Personen aufhalten, (wertvolle) Güter lagern und/oder eine erhöhte Brandgefahr besteht. Überwachungsbereiche können Teile eines Gebäudes, wie Räume, Lagerräume oder Serverräume sein, Teile eines Fahrzeugs, bspw. eines Schiffs, Zugs, Busses oder Flugzeugs, wie Fahrgastabteile oder Maschinenräume, aber auch ein Bereich in unmittelbarer Umgebung oder innerhalb eines Objekts, wie einer Maschine oder eines Schaltschranks.

Zur Erkennung von Partikeln befindet sich im Inneren des Gehäuses der Partikeldetektionseinheit die mit der Umgebungsluft in fluidleitendem Austausch stehende Detektionskammer. Der tatsächliche Detektionsbereich, innerhalb dessen mit der Umgebungsluft in die Detektionskammer transportierte Partikel erfasst werden können, wird üblicherweise durch Überlagerung des Lichts des Lichtsenders und des Einfallsbereichs des Lichtempfängers innerhalb der Detektionskammer definiert. Bei der Detektion werden die Partikel durch die vom Lichtsender ausgesendeten Lichtstrahlen angestrahlt und können entweder anhand des durch die Partikel reduzierten Durchlichts (Durchlichtdetektor) oder anhand des an den Partikeln gestreuten Streulichts (Streulichtdetektor) vom Lichtempfänger erkannt werden. Um sicherzustellen, dass ausschließlich das vom Lichtsender gesendete Licht die im Detektionsbereich befindlichen Partikel erreicht, ist die Detektionskammer von Umgebungslicht abgeschirmt.

Ein bekannter Anwendungsfall für die Verwendung von Partikeldetektionseinheiten sind Ansaugrauchmelder, auch als Ansaugpartikelerkennungssysteme oder aspirative Branderkennungssysteme bezeichnet. Derartige Ansaugpartikelerkennungssysteme umfassen mindestens eine Rohr- und/oder Schlauchleitung, die über eine oder mehrere Ansaugöffnungen zur jeweiligen Entnahme einer Fluidprobe, insbesondere einer Luftprobe, in einen oder mehrere Überwachungsbereiche mündet. Mehrere Überwachungsbereiche können zum Beispiel in unterschiedlichen Bereichen desselben Raums, wie einer (großen) Lagerhalle angeordnet sein, aber auch in jeweiligen Räumen eines Gebäudes oder Abschnitten eines Fahrzeugs, wie den Fahrgastkabinen eines Schiffes. Im Normalbetrieb des Ansaugpartikelerkennungssystems wird zur Entnahme der Fluidproben mittels eines Strömungsmittels, bspw. eines Gebläses oder eines Lüfters, eine Fluidströmung entlang der Rohr- und/oder Schlauchleitung erzeugt, innerhalb derer die Fluidproben zur Partikeldetektionseinheit transportiert werden. Um eine zuverlässige Funktion des Ansaugpartikelerkennungssystems gewährleisten zu können, ist es erforderlich, die erzeugte Fluidströmung kontinuierlich mittels eines Luftstromsensors zu überwachen. Anhand von Änderungen des Volumenstroms der Fluidströmung können beispielsweise Blockaden, Verstopfungen oder auch Undichtigkeiten erkannt werden.

Ein Ansaugpartikelerkennungssystem mit einer Partikeldetektionseinheit und einem Luftstromsensor ist bspw. aus der internationalen Offenlegungsschrift WO 2004/034001 A1 bekannt. Das als aspiratives Branderkennungssystem realisierte Ansaugpartikelerkennungssystem, umfasst mehrere Ansaugrohre mit jeweiligen Ansaugöffnungen, einen Detektor sowie einen Ventilator, der Luft aus dem Zielraum ansaugt und dem Detektor zuführt. Der Detektor besteht im Wesentlichen aus einem die Detektionskammer begrenzenden Gehäuse mit einem Lufteintrittskanal und einem Luftauslass, dem dazwischenliegenden Detektionsbereich, innerhalb dessen in der angesaugten Luft mitgeführte Brandkenngrößen wie bspw. Rauchpartikel erkannt werden können, und natürlich den Rauchsensoren. Zur Überwachung des Volumenstroms der angesaugten Luft wird ein Luftstromsensor in der Art eines Hitzdrahtanemometers verwendet. Dabei ragt ein erhitzter Draht mittig in den Luftstrom hinein, sodass dieser durch die strömende Luft abgekühlt wird. Die zur Beheizung des Drahts erforderliche elektrische Leistung entspricht der abgeführten Wärmemenge; rechnerisch kann so der Volumenstrom bestimmt werden. Um die für den zuverlässigen Nachweis von Verstopfungen oder Beschädigungen des Ansaugrohrsystems erforderliche, hohe Messgenauigkeit zu erreichen, soll eine Kompensation des Einflusses der Temperatur und der Dichte der überwachten Luft erfolgen. Hierzu ragt zusätzlich ein Temperatursensor, ebenfalls mittig, in den Luftstrom hinein. Nachteilig ist an der hier beschriebenen Volumenstrommessung zum einen der durch die konstante Beheizung des Drahts bedingte hohe Energiebedarf, zum anderen muss die Positionierung der Sensoren, mittig im Luftstrom exakt erfolgen, wodurch die Fertigungskosten steigen. Ferner sind die im Luftstrom positionierten Sensoren Verschmutzungs- und Korrosionseffekten ausgesetzt, die insbesondere durch die im Luftstrom mitgeführten Partikel verursacht werden.

Aus dem Stand der Technik sind andere Messtechniken zur Bestimmung des Volumenstroms, gerade auch für partikelbeladene Strömungen, bekannt. Die deutsche Übersetzung der europäischen Patentschrift DE 600 05 518 T2 offenbart bspw. ein Partikelerfassungssystem, für welches die volumetrische Luftflussrate anhand eines Differenzdrucksensors und eines Drucksensors zur Messung der Luftdichte bestimmt werden soll. Die Patentschrift US 4,856,328 B1 beschreibt einen Differenzdrucksensor zur Bestimmung des Volumenstroms, dessen Drucksensoren zwar in fluidischem Kontakt mit unterschiedlichen Kanalabschnitten stehen, aber zum Schutz vor Korrosion durch in der Strömung mitgeführte Partikel nicht direkt angeströmt werden.

Ein Ansaugpartikeldetektionssystem mit einem Luftstromsensor, bei welchem in einer Luftströmung enthaltene Partikel zur Branderkennung detektiert werden, ist bspw. auch aus der europäischen Patentschrift EP 2 278 567 B1 bekannt. Das Ansaugpartikeldetektionssystem umfasst mehrere Ansaugrohre mit jeweiligen Probenahmeöffnungen, die über einen gemeinsamen Kanal mit dem Detektorgehäuse verbunden sind. Innerhalb des Detektorgehäuses sind in Strömungsrichtung aufeinanderfolgend zunächst der Luftstromsensor, das die Luftströmung erzeugende Ansauggerät, ein Filter zur Filterung der in die Detektionskammer einströmenden Luft und schließlich die Detektionskammer selbst, innerhalb derer die tatsächliche Detektion von in der Luft enthaltenen Partikeln erfolgt, angeordnet. Der Luftstromsensor kann auch hier bspw. als Querschnittverengung konstruiert sein, wobei der über der Querschnittverengung anliegende Druckverlust mittels eines Manometers gemessen werden soll. Nachteilig ist an der beschriebenen Anordnung, dass der Luftstromsensor zur Überwachung der Durchflussrate der Luftströmung außerhalb der Detektionskammer, nämlich unmittelbar vor dem Ansauggerät angeordnet ist. Dies bedingt nicht nur einen erhöhten Platzbedarf, darüber hinaus entspricht auch die vom Luftstromsensor gemessene Durchflussrate nicht exakt der in der Detektionskammer selbst tatsächlich vorliegenden Durchflussrate. Letztere ist aber zur zuverlässigen Überprüfung der Funktionsfähigkeit eines Ansaugpartikelerkennungssystems maßgeblich.

Es ist die Aufgabe der vorliegenden Erfindung, die Nachteile aus dem Stand der Technik zu eliminieren und eine Partikeldetektionseinheit sowie ein Ansaugpartikelerkennungssystem zu schaffen, welches insbesondere eine zuverlässige, nicht-invasive Überwachung der Fluidströmung, einen dabei möglichst geringen Druckverlust, lange wartungsfreie Betriebszeiten und/oder eine kompakte Bauweise bei geringen Herstellungskosten ermöglicht.

Die Aufgabe wird gelöst durch eine Partikeldetektionseinheit gemäß Anspruch 1, und ein Ansaugpartikelerkennungssystem gemäß Anspruch 14.

Eine erfindungsgemäße, zur Verwendung mit einem Ansaugpartikelerkennungssystem konfigurierte Partikeldetektionseinheit der eingangs näher beschriebenen Art kennzeichnet sich dadurch, dass der Luftstromsensor innerhalb der Detektionskammer und in Strömungsrichtung der Fluidströmung nach dem Strömungseinlass der Detektionskammer sowie vor deren Strömungsauslass angeordnet ist.

Im Normalbetrieb eines Ansaugpartikelerkennungssystems wird mittels eines Strömungsmittels eine Fluidströmung ausgehend von in den zu überwachenden Bereich mündenden Ansaugöffnungen, und entlang der die Ansaugöffnungen aufweisenden Rohr- und/oder Schlauchleitungen erzeugt. Zur Verwendung mit dem Ansaugpartikelerkennungssystem ist die Partikeldetektionseinheit derart fluidleitend an die Rohr- und/oder Schlauchleitung angeschlossen, dass die erzeugte Fluidströmung über den Strömungseinlass in die Detektionskammer der Partikeldetektionseinheit ein- und über deren Strömungsauslass wieder austritt. In Bezug auf diese, im Normalbetrieb erzeugte Fluidströmung, ist der Luftstromsensor erfindungsgemäß innerhalb der Detektionskammer selbst, zwischen dem Strömungseinlass und dem Strömungsauslass, nämlich in Strömungsrichtung der Fluidströmung nach dem Strömungseinlass und vor dem Strömungsauslass angeordnet.

Indem der Luftstromsensor direkt in die Detektionskammer integriert ist, ist eine exakte Überwachung der die Detektionskammer tatsächlich durchströmenden Fluidströmung möglich. Gleichzeitig ist der Platzbedarf erheblich reduziert, da auf einen außerhalb der Detektionskammer als zusätzliches Bauteil realisierten Luftstromsensor gänzlich verzichtet werden kann. Die Überwachung der Fluidströmung anhand des gemessenen Differenzdrucks ermöglicht zudem eine nicht-invasive Messmethodik, bei welcher die Positionierung von Messmitteln innerhalb der Fluidströmung entbehrlich ist. Vorzugsweise kann die Detektionskammer mit dem darin integrierten ersten und zweiten Abschnitt des Luftstromsensors im Spritzgussverfahren als ein-, oder zweiteiliges Bauteil hergestellt werden, wodurch die Fertigungsqualität erhöht, die Fertigungsdauer verkürzt und die Fertigungskosten gesenkt werden.

Vorteilhafte Ausführungsformen der erfindungsgemäßen Partikeldetektionseinheit sind in den Unteransprüchen beansprucht und werden nachfolgend näher erläutert.

Dabei kann, nach einer beispielhaften Ausführungsform, der Luftstromsensor in der Art einer Messblende realisiert sein, wobei die Querschnittsverengung zwischen dem ersten Abschnitt und dem zweiten Abschnitt des Luftstromsensors angeordnet ist, und wobei die erste Querschnittsfläche eine zu der zweiten Querschnittsfläche identische Größe aufweist.

Nach einer alternativen beispielhaften Ausführungsform kann die Querschnittsverengung im ersten Abschnitt oder im zweiten Abschnitt des Luftstromsensors ausgebildet sein, wobei dann die erste Querschnittsfläche eine von der zweiten Querschnittsfläche abweichende Größe aufweist.

Vorzugsweise ist nach einer Erfindungsvariante die Detektionskammer der Partikeldetektionseinheit in mehrere Segmente oder Strömungsabschnitte unterteilt sein, und umfasst bspw. einen an den Strömungseinlass angrenzenden Eintrittskanal, einen an den Strömungsauslass angrenzenden Austrittskanal sowie den in diesem Fall dazwischenliegend angeordneten Detektionsbereich. Der Eintrittskanal und der Austrittskanal sind vorteilhafterweise derart ausgerichtet bzw. konstruiert, dass die über den Strömungseinlass eintretende Fluidströmung sowohl durch den Detektionsbereich als auch durch den Luftstromsensor geleitet wird.

Grundsätzlich ist es denkbar, den Luftstromsensor an beliebiger Position innerhalb der Detektionskammer zu platzieren. In Weiterbildung der zuvor beschriebenen Ausführungsform ist es aber vorteilhaft, dass der Luftstromsensor, nach einer Konstruktionsvariante innerhalb des Eintrittskanals der Detektionskammer, in Strömungsrichtung der Fluidströmung nach dem Strömungseinlass und vor dem Detektionsbereich, oder nach einer anderen Konstruktionsvariante innerhalb des Austrittskanals der Detektionskammer, in Strömungsrichtung der Fluidströmung dann entsprechend nach dem Detektionsbereich und vor dem Strömungsauslass angeordnet ist. Dabei kann der Luftstromsensor bspw. bündig an den Strömungseinlass bzw. den Strömungsauslass anschließen und/oder die entsprechenden Abschnitte der Detektionskammer ersetzend, selbst den Eintrittskanal bzw. Austrittskanal der Detektionskammer bilden.

Je nach Konstruktionsvariante durchströmt eine im Normalbetrieb eines Ansaugpartikelerkennungssystems erzeugte Fluidströmung, nach deren Eintritt ins Innere der Detektionskammer, also zunächst den Detektionsbereich und vorzugsweise unmittelbar daran anschließend den Luftstromsensor, oder andersherum, zunächst den Luftstromsensor und vorzugsweise unmittelbar daran anschließend den Detektionsbereich.

Um Druckverluste zu minimieren kann der Luftstromsensor einen in Strömungsrichtung der Fluidströmung auf den zweiten Abschnitt folgenden dritten Abschnitt aufweisen, wobei der zweite Abschnitt als Düse mit gegenüber der Querschnittsfläche des ersten Abschnitts geringerer Querschnittsfläche und der dritte Abschnitt als Diffusor mit in Strömungsrichtung der Fluidströmung kontinuierlich zunehmender Querschnittsfläche konstruiert sind.

Zur Differenzdruckmessung umfasst der Luftstromsensor mindestens einen Drucksensor. Nach einer optionalen Erfindungsvariante ist der mindestens eine Drucksensor ein mit dem ersten Abschnitt und dem zweiten Abschnitt des Luftstromsensors jeweils druckübertragend verbundener Differenzdrucksensor. Eine mögliche Realisierung von Differenzdrucksensoren umfasst bspw. zwei Messkammern mit einer dazwischenliegenden Membran, wobei die Messkammern über jeweilige Anschlüsse druckübertragend mit dem ersten Abschnitt bzw. dem zweiten Abschnitt des Luftstromsensors verbunden sind. Anhand der Auslenkung der Membran kann der zwischen den beiden Abschnitten anliegende Differenzdruck kontinuierlich erfasst werden. Der Differenzdrucksensor kann außerdem als vorkalibriertes, sogenanntes "MEMS" (**M**icro-**E**lectro-**M**echanical **S**ystem) mit einem Steuerungschip und einem Sensorchip konstruiert sein. Ein solches MEMS ermöglicht einen kompakten, platzsparenden Aufbau, eine kostengünstigere Herstellung durch die Möglichkeit zur Vorkalibrierung und eine Signalverarbeitung durch den Steuerungschip, wodurch die Signalverarbeitung in einem verbunden Microcontroller vereinfacht wird.

Nach einer dazu alternativen Erfindungsvariante kann der Luftstromsensor einen mit dem ersten Abschnitt druckübertragend verbundenen ersten Drucksensor, und einen mit dem zweiten Abschnitt druckübertragend verbundenen, zweiten Drucksensor umfassen. Der erste und der zweite Drucksensor sind vorzugsweise als Absolutdrucksensoren nach dem piezoresistiven oder dem kapazitiven Prinzip konfiguriert. Der zwischen dem ersten und dem zweiten Abschnitt des Luftstromsensors anliegende Differenzdruck wird rechnerisch anhand der Differenz des im ersten Abschnitt und im zweiten Abschnitt jeweils gemessenen Drucks bestimmt.

Nach einer optionalen Erfindungsweiterbildung ist zwischen dem mindestens einen Drucksensor und dem ersten Abschnitt sowie dem mindestens einen Drucksensor und dem zweiten Abschnitt des Luftstromsensors jeweils eine druckübertragende Feststoffbarriere, insbesondere ein fluiddurchlässiger Filter oder eine fluidundurchlässige Membran angeordnet. Die druckübertragende Feststoffbarriere kann dabei als Diffusionssperre fungieren und so Sensorik und Elektronik vor chemischen Einflüssen schützen. Der mindestens eine Drucksensor kann zum Beispiel über rohr- oder schlauchartige Anschlussstutzen oder entsprechende Gehäuseausnehmungen mit dem oder den jeweiligen Abschnitt(en) druckübertragend verbunden sein. Der fluiddurchlässige Filter oder die fluidundurchlässige Membran ist dann innerhalb der Anschlussstutzen oder Gehäuseausnehmungen, die dortigen Querschnitte ausfüllend, positioniert. In einfachster Ausführung kann bspw. ein feinporiger, fluiddurchlässiger Schaumstoff als druckübertragende Feststoffbarriere verwendet werden. Zwischen den mit der Detektionskammer druckübertragend verbundenen Anschlussstutzen oder Gehäuseausnehmungen und dem die Detektionskammer begrenzenden Gehäuse ist in vorteilhafter Erfindungsweiterbildung jeweils eine Dichtung zur Vermeidung von Druckverlusten angeordnet.

Nach einer vorteilhaften Ausführungsform der Erfindung sind der Lichtsender, der Lichtempfänger und der mindestens eine Drucksensor mit einer einzigen, gemeinsamen Leiterplatte, insbesondere mit deren Vorderseite, signalübertragend verbunden. Die mit dem Lichtsender und dem Lichtempfänger verbundene Leiterplatte stellt bspw. einen Bestandteil der Partikeldetektionseinheit dar, wobei der mindestens eine Drucksensor dann ebenfalls mit dieser, der Leiterplatte der Partikeldetektionseinheit verbunden ist. Bei Verwendung eines Differenzdrucksensors sind folglich der Differenzdrucksensor, der Lichtsender und der Lichtempfänger jeweils mit derselben Leiterplatte verbunden. Bei Verwendung eines ersten und eines zweiten Drucksensors sind entsprechend der erste Drucksensor, der zweite Drucksensor, der Lichtsender und der Lichtempfänger mit derselben Leiterplatte verbunden.

Optional kann die Partikeldetektionseinheit außerdem einen Temperatursensor zur Messung der der in der Detektionskammer vorliegenden Umgebungstemperatur und/oder einen Luftdrucksensor zur Messung des in der Detektionskammer vorliegenden Umgebungsdrucks aufweisen. Als Temperatursensor kann bspw. ein Thermoelement, ein Thermistor oder ein PTC-Widerstand verwendet werden. Vorzugsweise sind der Temperatursensor, der Lichtsender und der Lichtempfänger mit derselben Leiterplatte, insbesondere der Leiterplatte der Partikeldetektionseinheit, verbunden. Der Temperatursensor steht mit der Detektionskammer über eine das die Detektionskammer begrenzende Gehäuse durchsetzenden Öffnung in Verbindung. Der Luftdrucksensor kann nach dem piezoresistiven oder dem kapazitiven Prinzip konfiguriert und ebenfalls über eine bzw. dieselbe Öffnung des die Detektionskammer begrenzenden Gehäuses mit dieser in Verbindung stehen. Bei der Verwendung zweier Drucksensoren zur Ermittlung des Differenzdrucks kann der Luftdrucksensor als ein mit dem ersten Abschnitt der Detektionskammer druckübertragend verbundener erster Drucksensor konfiguriert sein. Nach einer besonders vorteilhaften Ausführungsform sind der Temperatursensor und der Luftdrucksensor miteinander kombiniert und zur gleichzeitigen Erfassung der in der Detektionskammer vorliegenden Umgebungstemperatur bzw. des Umgebungsdrucks konfiguriert.

Von Vorteil ist nach einer optionalen Ausgestaltung der Erfindung, dass der mindestens eine Drucksensor des Luftstromsensors signalübertragend mit einem Steuerungsmodul verbunden ist, wobei das Steuerungsmodul zur Ermittlung des Volumenstroms anhand der gemessenen Druckdifferenz konfiguriert ist. Zur Berechnung können insbesondere die jeweiligen Größen der Querschnittsflächen des ersten und des zweiten Abschnitts des Luftstromsensors und/oder deren Verhältnis zueinander auf dem Steuerungsmodul hinterlegt sein. Vorzugsweise sind die geometrischen Verhältnisse der Detektionskammer als normierte Transferkurve auf dem Steuerungsmodul hinterlegt. Der Einfluss von Fertigungstoleranzen kann durch Festlegung der Endpunkte der Transferkurve eingestellt werden. Die signalübertragende Verbindung kann bspw. mittels Leitungen, insbesondere Kabeln oder auch kabellos, bspw. über eine LAN- und/oder Internetverbindung realisiert sein.

In besonders vorteilhafter Weiterbildung dieser optionalen Ausgestaltung ist der mindestens eine Drucksensor des Luftstromsensors direkt mit der Leiterplatte der Partikeldetektionseinheit verlötet, wobei die signalübertragende Verbindung zum Steuerungsmodul, insbesondere einem mit derselben Leiterplatte verlöteten Microcontroller, dann mittels gedruckter Leitungen der Leiterplatte realisiert ist. Bei dieser Weiterbildung sind, der Lichtsender und der Lichtempfänger, der Differenzdrucksensor bzw. der erste und der zweite Drucksensor sowie das Steuerungsmodul jeweils mit derselben Leiterplatte verbunden, insbesondere direkt auf deren Vorderseite verlötet.

Optional können auch der Temperatur- und/oder Luftdrucksensor signalübertragend mit dem Steuerungsmodul verbunden sein, wobei das Steuerungsmodul dann für die Ermittlung des Volumenstroms zur Kompensation des Einflusses der in der Detektionskammer vorliegenden Umgebungstemperatur und/oder des Einflusses des dortigen Umgebungsdrucks konfiguriert ist.

Die Berechnung des Volumenstroms erfolgt auf Basis der gemessenen Druckdifferenz, und zwar in Abhängigkeit von der Dichte des die Detektionskammer durchströmenden Fluids. Im vorgesehen Verwendungsfall, d. h. sofern die Partikeldetektionseinheit mit einem Ansaugpartikelerkennungssystem verwendet wird, handelt es sich bei dem Fluid in der Regel um Luft, deren Dichte unter Normbedingungen, bei einer Umgebungstemperatur von 20°C und einem Umgebungsdruck von 1013,25 mbar, etwa 1,2 kg/m³ beträgt. Mit zunehmender Umgebungstemperatur und/oder abnehmendem Umgebungsdruck sinkt die Luftdichte, mit abnehmender Umgebungstemperatur und/oder zunehmendem Umgebungsdruck steigt die Luftdichte. Die entsprechenden Zusammenhänge sind bekannt und/oder können anhand entsprechender Kalibrierungsmessungen unter Realbedingungen bei unterschiedlichen Umgebungstemperaturen und/oder Umgebungsdrücken ermittelt werden und bspw. in tabellarischer Form auf dem Steuerungsmodul hinterlegt sein. Anhand der vom Temperartur- und/oder Luftdrucksensor gemessenen und an das Steuerungsmodul übermittelten Werte kann dann eine Kompensation des rechnerisch ermittelten Volumenstroms durchgeführt werden, wobei die Ausgabe des Volumenstrommesswerts vorzugsweise in Normliter pro Minute, d.h. bezogen auf eine Umgebungstemperatur von 0°C und einen Umgebungsdruck von 1013,25 mbar erfolgt.

Die Dichte und/oder Viskosität des anzusaugenden Fluids und folglich mittelbar die Umgebungstemperatur und/oder der Umgebungsdruck hat ferner Einfluss auf die Förderleistung eines zur Erzeugung der Fluidströmung verwendeten Strömungsmittels, bspw. eines Lüfters, welcher Bestandteil des Ansaugpartikelerkennungssystems sein kann. Bei konstanter Lüfterspannung und zunehmender Dichte und/oder Viskosität des geförderten Fluids nimmt der Volumenstrom ab, wohingegen bei konstanter Lüfterspannung und abnehmender Dichte und/oder Viskosität der Volumenstrom zunimmt.

Dieser mittelbare Einfluss von Umgebungstemperatur und/oder Umgebungsdruck auf die Förderleistung des Strömungsmittels kann ebenfalls anhand entsprechender Kalibrierungsmessungen unter Realbedingungen bei unterschiedlichen Umgebungstemperaturen und/oder Umgebungsdrücken ermittelt, bspw. in tabellarischer Form auf dem Steuerungsmodul hinterlegt, und zur rechnerischen Ermittlung des Volumenstroms berücksichtigt werden.

Die oben beschriebenen Zusammenhänge zwischen Umgebungstemperatur und/oder Umgebungsdruck können also jeweils vorab ermittelt und auf dem Steuerungsmodul, insbesondere einer Speichereinheit des Steuerungsmoduls der Partikeldetektionseinheit hinterlegt sein, und dort zur Kompensation des mit dem Luftstromsensor konstant ermittelten (Ist-)Volumenstroms herangezogen werden.

In vorteilhafter Erfindungsweiterbildung umfasst das Steuerungsmodul daher eine Speichereinheit, die optional auch zur Hinterlegung eines vorgebbaren Soll-Volumenstroms oder eines vorgebbaren Soll-Volumenstrombereichs vorgesehen ist, wobei das Steuerungsmodul zur Erkennung von Abweichungen des ermittelten Volumenstroms von dem vorgegebenen Soll-Volumenstrom oder dem vorgegebenen Soll-Volumenstrombereich konfiguriert ist.

Im vorgesehen Verwendungsfall, d. h. sofern die Partikeldetektionseinheit mit einem Ansaugpartikelerkennungssystem verwendet wird, liegt der vom Strömungsmittel erzeugte Volumenstrom, abhängig vom Fluidleitungssystem, insbesondere abhängig von der Länge, vom Durchmesser und der Anzahl der Rohr- und/oder Schlauchleitungen sowie vom Durchmesser und der Anzahl der Ansaugöffnungen, üblicherweise in einem Bereich von 20 - 75 l/min, bevorzugt 30 - 60 l/min. Der im Normalbetrieb des Ansaugpartikelerkennungssystems erforderliche Volumenstrom kann entweder konkret, als Soll-Volumenstromwert, bspw. 50 l/min oder einen Bereich abdeckend, als Soll-Volumenstrombereich, bspw. 40 - 60 l/min, auf der Speichereinheit des Steuerungsmoduls hinterlegt sein. Alternativ dazu kann der Prozentsatz der erlaubten Abweichung auf der Speichereinheit hinterlegt sein, z. B. einen Wert zwischen 10% und 50%, vorzugsweise 20%. Das Steuerungsmodul kann bspw. zur Erkennung von Abweichungen konfiguriert sein, indem der mit dem Luftstromsensor ermittelte Ist-Volumenstrom kontinuierlich, periodisch oder zu einem oder mehreren konkreten Zeitpunkten mit dem hinterlegten Soll-Volumenstrom oder Soll-Volumenstrombereich verglichen wird. Dabei kann sowohl eine Unterschreitung, wie auch eine Überschreitung des Soll-Volumenstroms oder des Soll-Volumenstrombereichs erkannt werden.

Eine Unterschreitung des Soll-Volumenstroms oder des Soll-Volumenstrombereichs kann auf Blockaden und/oder Verstopfungen, und eine Überschreitung des Soll-Volumenstroms oder des Soll-Volumenstrombereichs auf Undichtigkeiten von mit der Partikeldetektionseinheit verbundenen Fluidleitungssystemen hinweisen. Nach einer optionalen Erfindungsvariante ist das Steuerungsmodul daher zur Ausgabe einer auf Undichtigkeiten, Blockaden und/oder Verstopfungen jeweiliger Rohr- und/oder Schlauchleitungen bzw. der entsprechenden Ansaugöffnungen eines die Partikeldetektionseinheit verwendenden Ansaugpartikelerkennungssystems hinweisenden Meldung, basierend auf einer erkannten Abweichung von dem vorgegebenen Soll-Volumenstrom oder dem vorgegebenen Soll-Volumenstrombereich konfiguriert.

Da auch bei uneingeschränkter Funktionsfähigkeit des Ansaugpartikelerkennungssystems im Normalbetrieb stets betriebsbedingte Schwankungen des Volumenstroms auftreten, ist es vorteilhaft, jeweilige sogenannte Störungsschwellen für die zu erkennende Unterschreitung bzw. Überschreitung des vorgegebenen Soll-Volumenstroms festzulegen. Die auf eine Störung des Fluidleitungssystems hinweisende Meldung wird in diesem Fall lediglich dann ausgegeben, sofern die Abweichung des ermittelten Ist-Volumenstroms vom hinterlegten Soll-Volumenstrom die jeweils festgelegte Störungsschwelle unter- bzw. überschreitet. Die Störungsschwellen sind an das jeweilige Fluidleitungssystem anzupassen, und vorzugsweise in einem Bereich zwischen 10% und 50%, unabhängig voneinander einstellbar. Bei Fluidleitungssystemen mit hohen Volumenströmen, bspw. einem Soll-Volumenstrom von 75 l/min, hat es sich als vorteilhaft herausgestellt, die obere Störungsschwelle, für eine zu meldende Überschreitung des Soll-Volumenstroms, auf höchstens +20% einzustellen, was im konkreten Beispiel einem Volumenstrom von 90 l/min entspräche. Die untere Störungsschwelle, für eine zu meldende Unterschreitung des Soll-Volumenstroms, kann bspw. auf -40 % eingestellt werden, was im konkreten Beispiel einem Volumenstrom von 45 l/min entspräche. Bei der beispielhaften Einstellung erfolgt die Ausgabe der auf eine entsprechende Störung hinweisenden Meldung also nur, sofern der zwischen dem hinterlegten Soll-Volumenstrom und dem mit dem Luftstromsensor ermittelten Ist-Volumenstrom durchgeführte Vergleich eine Überschreitung um mehr als 20 % oder eine Unterschreitung um mehr als 40 % ergibt, oder anders ausgedrückt, sofern der ermittelte Ist-Volumenstrom den durch die Störungsschwellen vorgegebenen Soll-Volumenstrombereich, im konkreten Beispiel zwischen 45 l/min und 90 l/min liegend, verlässt.

Die Erkennung von Abweichungen des ermittelten Volumenstroms von dem vorgegebenen Soll-Volumenstrom oder dem vorgegebenen Soll-Volumenstrombereich kann vorzugsweise durch das Steuerungsmodul der Partikeldetektionseinheit selbst erfolgen. Alternativ dazu können die ermittelten Volumenstromwerte zur weiteren Verarbeitung und Auswertung aber auch an ein weiteres Steuerungsmodul übermittelt werden, welches bspw. Bestandteil des Ansaugpartikelerkennungssystems ist, oder auch eines dritten, davon unabhängigen, insbesondere mobilen Geräts, wie einem Laptop, einem Tablet, einem Mobiltelefon oder einem speziell zur Auswertung der von einer Partikeldetektionseinheit oder einem Ansaugpartikelerkennungssystem stammenden Überwachungsdaten konfigurierten Diagnosetool. Die Kommunikation zwischen dem Steuerungsmodul der Partikeldetektionseinheit und dem weiteren Steuerungsmodul findet z.B. über ein Datenkabel oder drahtlos statt. Insbesondere ist auch denkbar, dass das Steuerungsmodul der Partikeldetektionseinheit über eine LAN- und/oder Internetverbindung mit einer Cloud kommuniziert, wobei die Funktion des weiteren Steuerungsmoduls dann in der Cloud durchgeführt wird.

Die eingangs gestellte Erfindungsaufgabe wird auch durch ein Ansaugpartikelerkennungssystem, insbesondere ein Ansaugbranderkennungssystem zum Erkennen eines Brandes und/oder einer Brandentstehung gelöst. Das Ansaugpartikelerkennungssystem umfasst ein Fluidleitungssystem mit mindestens einer Rohr- und/oder Schlauchleitung, die über eine oder mehrere Ansaugöffnungen zur jeweiligen Entnahme einer Fluidprobe in einen oder mehrere Überwachungsbereiche mündet, ein Strömungsmittel, das zur Erzeugung einer Fluidströmung entlang der mindestens einen Rohr- und/oder Schlauchleitung mit dieser fluidleitend verbunden ist, mindestens eine Partikeldetektionseinheit, insbesondere nach einer der zuvor beschriebenen Ausführungen, mit einem Lichtsender und einem Lichtempfänger zur Detektion von in der Fluidströmung enthaltenen Partikeln sowie mit einer von einem Gehäuse begrenzten Detektionskammer, die einen Strömungseinlass zum Eintritt der Fluidströmung in die Detektionskammer und einen Strömungsauslass zum Austritt der Fluidströmung aus der Detektionskammer aufweist, sowie einen Luftstromsensor, der mindestens einen Drucksensor sowie mindestens einen ersten Abschnitt und einen zweiten Abschnitt umfasst, wobei der erste Abschnitt eine erste Querschnittsfläche und der zweite Abschnitt eine zweite Querschnittsfläche mit von der ersten Querschnittsfläche abweichender Größe aufweist, und wobei der mindestens eine Drucksensor zur Messung einer zwischen dem ersten und dem zweiten Abschnitt vorliegenden Druckdifferenz ausgebildet ist.

Erfindungsgemäß kennzeichnet sich das Ansaugpartikelerkennungssystem dadurch, dass der Luftstromsensor innerhalb der Detektionskammer und in Strömungsrichtung der Fluidströmung im Normalbetrieb des Ansaugpartikelerkennungssystems nach dem Strömungseinlass der Detektionskammer sowie vor dem Strömungsauslass der Detektionskammer angeordnet ist.

Indem der auf dem erfassten Differenzdruck basierende Luftstromsensor direkt in die Detektionskammer integriert ist, ist eine exakte, nicht invasive Überwachung der die Detektionskammer tatsächlich durströmenden Fluidströmung bei erheblich reduziertem Platzbedarf und dadurch besonders kompakter Bauweise der Partikeldetektionseinheit möglich. Darüber hinaus kann auf (weitere), an andere Stelle im Ansaugpartikelerkennungssystem positionierte Luftstromsensoren verzichtet werden.

Durch die kompakte Bauweise der Partikeldetektionseinheit mit jeweils integriertem Luftstromsensor, wird ein modularer Aufbau bei Ansaugpartikelerkennungssystemen mit mehreren Rohr- und/oder Schlauchleitungen, sogenannten "Ästen", begünstigt.

Nach einer vorteilhaften Ausführungsform des Ansaugpartikelerkennungssystems ist daher jeder Rohr- und/oder Schlauchleitung eine jeweilige Partikeldetektionseinheit mit integriertem Luftstromsensor zur rohr- und/oder schlauchleitungsspezifischen Überwachung der Fluidströmung zugeordnet. Indem die Fluidströmung innerhalb der jeweiligen Detektionskammer sowohl durch den dortigen Detektionsbereich als auch den dortigen Luftstromsensor geführt wird, können die von unterschiedlichen Rohr- und/oder Schlauchleitungen stammenden Fluidströmungen jeweils spezifisch auf darin enthaltene Partikel und/oder Abweichungen vom vorgegebenen Volumenstrom hin überwacht werden. Etwaige Störungen können dann den entsprechenden Rohr- und/oder Schlauchleitungen zugeordnet werden, wodurch eine Lokalisierung bspw. eines Brands, einer Brandentstehung und/oder einer Undichtigkeit, Blockade oder Verstopfung erheblich vereinfacht wird. Als günstig hat sich herausgestellt, in einem Ansaugpartikelerkennungssystem die modulare Verwendung zweier Partikeldetektionseinheiten vorzusehen, die zur separaten Überwachung jeweiliger Rohr- und/oder Schlauchleitungen, der sogenannten Äste, fluidleitend mit diesen verbunden werden können. Bedarfsweise können dann entweder eine oder beide Partikeldetektionseinheiten z. B. in ein gemeinsames Grundgerät des Ansaugpartikelerkennungssystems, welches außerdem noch das Strömungsmittel umfasst, eingesteckt werden. Über das Grundgerät wird die fluidleitende Verbindung jeweils zu den daran angeschlossenen Rohr- und/oder Schlauchleitungen und zur zugeordneten Partikeldetektionseinheit hergestellt.

Dabei kann, nach einer beispielhaften Ausführungsform, der Luftstromsensor in der Art einer Messblende realisiert sein, wobei die Querschnittsverengung zwischen dem ersten Abschnitt und dem zweiten Abschnitt des Luftstromsensors angeordnet ist, und wobei die erste Querschnittsfläche eine zu der zweiten Querschnittsfläche identische Größe aufweist.

Nach einer alternativen beispielhaften Ausführungsform kann die Querschnittsverengung im ersten Abschnitt oder im zweiten Abschnitt des Luftstromsensors ausgebildet sein, wobei dann die erste Querschnittsfläche eine von der zweiten Querschnittsfläche abweichende Größe aufweist.

Vorzugsweise ist gemäß einer Erfindungsvariante die jeweilige Größe der ersten und/oder der zweiten Querschnittsfläche des Luftstromsensors für den durch das Strömungsmittel bereitgestellten Volumenstrom oder Volumenstrombereich, mit dem die Fluidströmung die Detektionskammer durchströmt, ausgelegt.

Der vom Strömungsmittel zu erzeugende Volumenstrom hängt vom Durchmesser, der Länge und der Anzahl der Rohr- und/oder Schlauchleitungen sowie vom Durchmesser und der Anzahl der Ansaugöffnungen des Ansaugpartikelerkennungssystems ab, und liegt üblicherweise in einem Bereich von 20 - 75 l/min. Die Geometrie der jeweiligen Abschnitte des Luftstromsensor ist vorzugsweise so ausgelegt, dass eine Ermittlung des Differenzdrucks für den gesamten Volumenstrombereich und zusätzlich für darüberhinausgehende, betriebsbedingte Schwankungen des Volumenstroms von bis zu +/- 50% mit der erforderlichen Genauigkeit und möglichst geringem Druckverlust durchgeführt werden kann. Insbesondere hat sich dabei als günstig herausgestellt, dass die Querschnittsfläche entweder des ersten oder des zweiten Abschnitts in etwa der Querschnittsfläche der Rohr- und/oder Schlauchleitungen entspricht und die Querschnittsfläche des jeweils anderen Abschnitts in etwa 25 - 30% davon beträgt. Das Verhältnis der ersten und der zweiten Querschnittsfläche zueinander liegt vorzugsweise ebenfalls bei etwa 25 - 30% und besonders bevorzugt bei 30%.

Dadurch, dass die Geometrie des Luftstromsensors zur Verwendung im gesamten, für Ansaugpartikelerkennungssysteme üblichen Volumenstrombereich inklusive betriebsbedingter Schwankungen (ca. 20 l/min - 95 l/min) ausgelegt ist, können baugleiche Partikeldetektionseinheiten mit identischer Luftstromsensorgeometrie den jeweiligen Rohr- und/oder Schlauchleitungen des Ansaugpartikelerkennungssystems zugeordnet werden, auch wenn deren Leitungslänge und Anzahl an Ansaugöffnungen voneinander abweicht. Zur Feststellung etwaiger Abweichungen des jeweils ermittelten Ist-Volumenstroms vom Soll-Volumenstrom oder Soll-Volumenstrombereich können jeweilige, an die Leitungslänge und die Anzahl an Ansaugöffnungen der entsprechenden Rohr- und/oder Schlauchleitung spezifisch angepasste SollWerte auf jeweiligen Steuerungsmodulen der Partikeldetektionseinheit hinterlegt sein.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels der Erfindung und den Zeichnungen. Diese zeigen in
- Fig. 1: eine schematische Darstellung eines Ansaugpartikelerkennungssystems mit einer verzweigten Rohr- und/oder Schlauchleitung,
- Fig. 2: eine beispielhafte, zweiteilige Ausführungsform einer erfindungsgemäßen Partikeldetektionseinheit mit Luftstromsensor und Leiterplatte in perspektivischer Explosionsdarstellung,
- Fig. 3: eine perspektivische Teilansicht der Partikeldetektionseinheit aus Figur 2 von oben,
- Fig. 4: einen Ausschnitt der Teilansicht aus Figur 3, der mehrere Abschnitte des Luftstromsensors zeigt, und
- Fig. 5: eine schematisch angedeutete Darstellung der Geometrie des Luftstromsensors.

Die Figuren sind lediglich beispielhafter Natur und dienen nur dem Verständnis der Erfindung. Die gleichen Elemente sind mit denselben Bezugszeichen versehen.

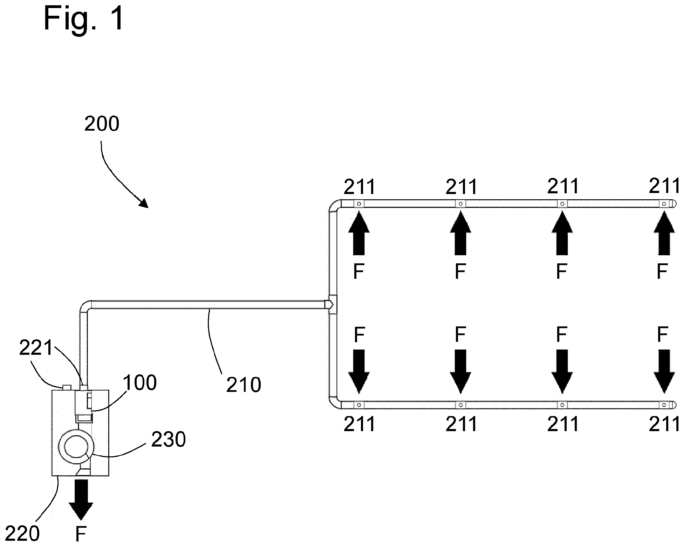

Figur 1 zeigt eine schematische Darstellung eines Ansaugpartikelerkennungssystems 200 mit einer Rohr- und/oder Schlauchleitung 210 und einem Grundgerät 220. Die in dem hier dargestellten Fall verzweigte Rohr- und/oder Schlauchleitung 210 umfasst mehrere Ansaugöffnungen 211, die in einen oder mehrere Überwachungsbereiche münden. Das Grundgerät 220 weist ein Strömungsmittel 230 auf, bspw. einen Lüfter, sowie zwei Leitungsanschlüsse 221. Zur Entnahme jeweiliger Fluidproben aus den Überwachungsbereichen erzeugt das Strömungsmittel 230 eine in Richtung des Grundgeräts 220 gerichtete Fluidströmung F entlang der Rohr- und/oder Schlauchleitung 210. Die Rohr- und/oder Schlauchleitung ist zu diesem Zweck an einen der Leitungsanschlüsse 221 fluidleitend angeschlossen. An den anderen Leitungsanschluss 221 kann bedarfsweise eine hier nicht dargestellte, zweite Rohr- und/oder Schlauchleitung 210 angeschlossen werden. Für jede angeschlossene Rohr- und/oder Schlauchleitung 210 kann das Grundgerät 220 ferner eine jeweilige Partikeldetektionseinheit 100 umfassen, die mit der entsprechend zugeordneten Rohr- und/oder Schlauchleitung 210 fluidleitend verbunden ist. Im hier gezeigten Beispiel ist lediglich eine Rohr- und/oder Schlauchleitung 210 an das Grundgerät angeschlossen und folglich auch nur ein Partikeldetektionseinheit 100 dargestellt.

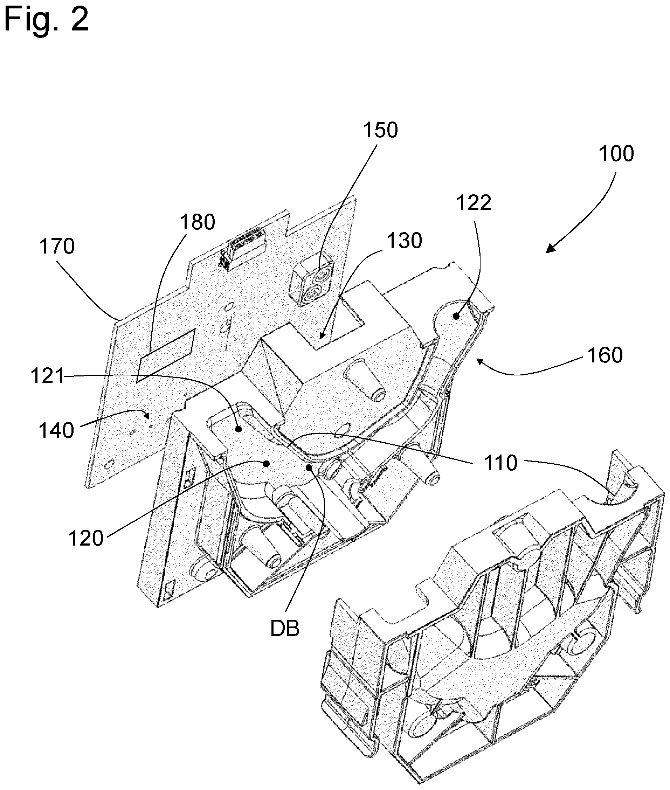

In der Figur 2 ist eine beispielhafte Ausführungsform einer erfindungsgemäßen Partikeldetektionseinheit 100 mit einem Luftstromsensor 160 und einer Leiterplatte 170 in einer perspektivischen Explosionsdarstellung zu sehen. Die Partikeldetektionseinheit 100 ist in der vorliegend dargestellten Ausführungsform zweiteilig im Spritzgussverfahren hergestellt, wobei beide Teile gemeinsam das die Detektionskammer 120 begrenzende Gehäuse 110 bilden. Die durch das Gehäuse 110 von Umgebungslicht abgeschirmte Detektionskammer 120 erstreckt sich vom Strömungseinlass 121 zum Strömungsauslass 122 in etwa U-förmig, wobei sich im mittleren U-Segment der durch Überlagerung des vom Lichtsender 130 gesendeten Lichts und des Einfallsbereichs des Lichtempfängers 140 definierte Detektionsbereich DB befindet. Die beiden U-Schenkel bilden den sich an den Strömungseinlass 121 unmittelbar bündig anschließenden Eintrittskanal und den an den Strömungsauslass 122 unmittelbar bündig angrenzenden Austrittskanal. Der Austrittskanal weist im vorliegenden Ausführungsbeispiel den Luftstromsensor 160 auf, bzw. wird der Austrittskanal durch den Luftstromsensor 160 selbst gebildet.

Der in der Figur 2 nicht dargestellte Lichtsender 130 und Lichtempfänger 140 sind als sogenannte "Surface-Mount" LEDs unmittelbar auf der Oberfläche oder Vorderseite der Leiterplatte 170 montiert. Zu erkennen ist der für den Lichtempfänger 140 vorgesehene Montageplatz. Ebenfalls unmittelbar mit der Vorderseite der Leiterplatte 170 verbunden, ist außerdem ein als Differenzdrucksensor konfigurierter Drucksensor 150 und ein hier nur schematisch angedeutetes Steuerungsmodul 180, bspw. ein Microcontroller. Der Differenzdrucksensor 150 ist als Bestandteil des Luftstromsensors 160 direkt unterhalb des an den Strömungsauslass 122 angrenzenden Austrittskanals der Detektionskammer 120 angeordnet und zur Messung einer im Luftstromsensor 160 vorliegenden Druckdifferenz konfiguriert. Anhand der gemessenen Druckdifferenz wird mittels des Steuerungsmoduls 180 der Volumenstrom der die Detektionskammer 120 durchströmenden Fluidströmung F rechnerisch ermittelt.

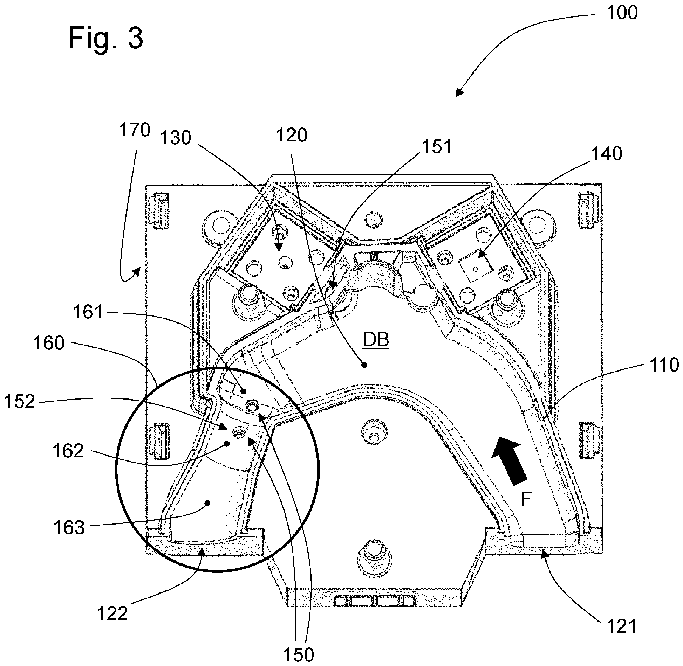

Figur 3 zeigt eine perspektivische Teilansicht der Partikeldetektionseinheit 100 aus Figur 2 von oben, wobei die Leiterplatte 170 (s. auch Figur 2) unmittelbar darunter angeordnet ist. Anhand der jeweiligen Montageplätze auf der Leiterplatte 170 ist die Positionierung des Lichtsenders 130 und des Lichtempfängers 140, schräg zueinander, gut zu erkennen. Im mittleren Segment der U-förmigen Detektionskammer 120 ist zwischen dem Lichtsender 130 und dem Lichtempfänger 140, in deren Überschneidungsbereich, der Detektionsbereich DB definiert. Die Strömungsrichtung der vom Strömungsmittel 230 des Ansaugpartikelerkennungssystems 200 (s. Figur 1) im Normalbetrieb erzeugten Fluidströmung F ist anhand eines Pfeils veranschaulicht. Die Fluidströmung F tritt über den Strömungseinlass 121 in die Detektionskammer 120 ein, durchströmt zunächst den darauffolgenden Detektionsbereich DB und anschließend den Luftstromsensor 160, bevor sie über den Strömungsauslass 122 aus der Detektionskammer 120 austritt. Ebenfalls im mittleren Segment der U-förmigen Detektionskammer 120, unmittelbar vor dem Lichtsender 130, ist eine das Gehäuse 110 durchsetzende Aussparung gebildet, über welche ein auf der Leiterplatte 170 montierter Temperatur- und Luftdrucksensor 151 zur Messung der in der Detektionskammer 120 vorliegenden Umgebungstemperatur und des Umgebungsdrucks, temperatur- und drückübertragend mit der Detektionskammer 120 verbunden ist. Die vom Temperatur- und Luftdrucksensor 151 gemessenen Werte können zur Kompensation des Temperatur- und Druckeinflusses auf die Berechnung des Volumenstroms anhand der mit dem Differenzdrucksensor 150 gemessenen Druckdifferenz herangezogen werden. Alternativ, und in der Figur 3 nicht dargestellt, kann der Differenzdruck durch Bildung der Differenz der gemessene Druckwerte zweier Absolutdrucksensoren ermittelt werden. In diesem Fall fungiert der Temperatur- und Luftdrucksensor 151 als erster Drucksensor, ein zweiter Drucksensor 152 ist dann anstelle des Differenzdrucksensors 150 im Bereich des Austrittskanals bzw. Luftstromsensors angeordnet.

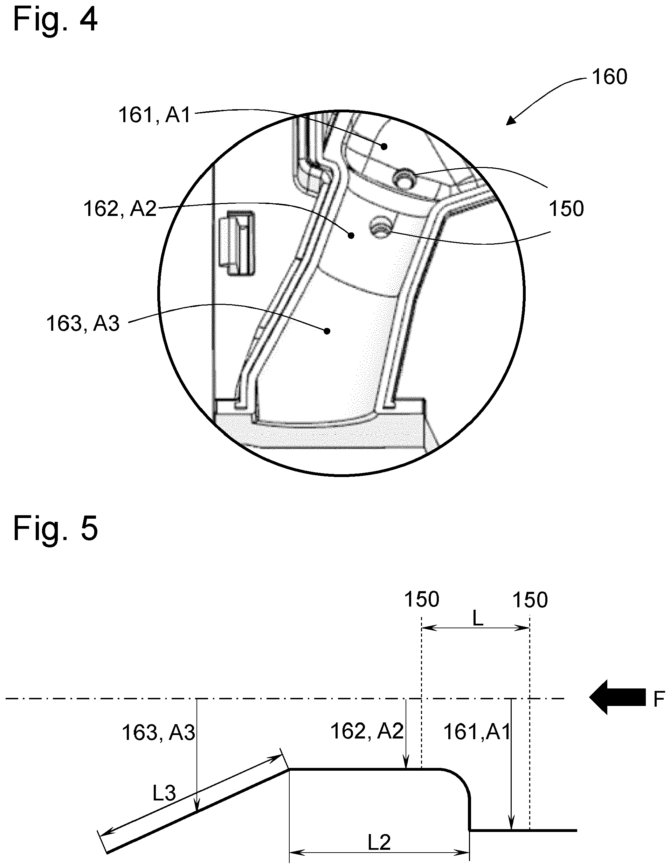

Die einzelnen Abschnitte 161, 162, 163 des Luftstromsensors 160 sind in der Figur 3 anhand einer kreisförmigen Markierung hervorgehoben und in der Figur 4 in einem entsprechenden Ausschnitt vergrößert dargestellt. Der Luftstromsensor 160 umfasst in der hier gezeigten Ausführungsform insgesamt drei Abschnitte, den ersten Abschnitt 161 mit einer ersten Querschnittsfläche A1, den zweiten Abschnitt 162 mit einer zweiten Querschnittsfläche A2 und den dritten Abschnitt 163 mit einer dritten Querschnittsfläche A3, die in der genannten Reihenfolge in Strömungsrichtung der Fluidströmung F aufeinanderfolgen. Zur Beschleunigung der Fluidströmung F, ist der zweite Abschnitt 162 als Düse, mit einer gegenüber der Querschnittsfläche A1 des ersten Abschnitts 161 kleineren Querschnittsfläche A2 ausgebildet. Die zwischen dem ersten Abschnitt 161 und dem zweiten Abschnitt 162 entsprechend vorliegende Druckdifferenz wird mittels des Differenzdrucksensors 150 gemessen. Hierzu ist der Differenzdrucksensor 150 über einen jeweiligen Anschluss (s. auch Figur 2) und komplementäre, das Gehäuse 110 der Partikeldetektionseinheit 100 durchsetzende Aussparungen sowohl mit dem ersten Abschnitt 161 als auch mit dem zweiten Abschnitt 162 jeweils druckübertragend verbunden. Bei dieser nicht-invasiven Messmethode zur Bestimmung des Differenzdrucks, ist eine Positionierung der Sensorik direkt innerhalb der Fluidströmung F nicht erforderlich. Um die Sensorik auch vor möglichen chemischen Einflüssen zu schützen, können in die das Gehäuse 110 durchsetzenden Aussparungen optional und hier nicht dargestellt, druckübertragende Feststoffbarrieren, wie bspw. eine Membran oder auch ein feinporiger Schaumstoff eingesetzt werden. In der hier gezeigten Ausführungsform folgt, bezogen auf die Strömungsrichtung der Fluidströmung F, auf den zweiten Abschnitt 162 ein als Diffusor ausgebildeter, optionaler dritter Abschnitt 163, dessen Querschnittsfläche A3 zur kontrollierten Verlangsamung der Fluidströmung F in Strömungsrichtung kontinuierlich zunimmt.

Zur Verwendung mit einem Ansaugpartikelerkennungssystem 200 werden Geometrie und Abmessungen des Luftstromsensors 160 an die speziell an die dortigen Betriebsparameter, wie Gesamtlänge und Durchmesser der Rohr- und/oder Schlauchleitungen 210, Anzahl und Durchmesser der Ansaugöffnungen 211 und Volumenstrom der Fluidströmung F angepasst ausgelegt.

In der Figur 5 sind daher Geometrie und ungefähre Größenverhältnisse der einzelnen Abschnitte 161, 162, 163 des Luftstromsensors 160 schematisch angedeutet. Zur Auslegung des Luftstromsensors 160 sind eine möglichst hohe Messgenauigkeit, ein breiter Anwendungsbereich für verschiedene Volumenströme und ein möglichst geringer Druckverlust am Luftstromsensor 160 zu berücksichtigen. Anhand von Versuchsreihen hat sich gezeigt, dass für einen Volumenstrombereich von 20 l/min bis 95 l/min, eine Druckdifferenz von 250/270 Pa und einen Abstand L der Druckabnahmepunkte des Differenzdrucksensors 150 zueinander von etwa 6 - 8 mm ein optimaler Kompromiss zwischen Messgenauigkeit und Druckverlust für ein Verhältnis der Querschnittsflächen A2/A1 des ersten und des zweiten Abschnitts 161, 162 von etwa 30% erreicht werden konnte. Der exakte Abstand L der beiden Druckabnahmepunkte hängt vom jeweils verwendeten Sensormodell ab und wird durch dieses vorgegeben. Die Querschnittsfläche A2 des zweiten Abschnitts 162 bzw. der Düse ist kreisrund. Die Gesamtlänge L2 der Düse beträgt in etwa das 1,3-fache des Düsendurchmessers. Zur weiteren Reduzierung von Druckverlusten ist der Einlauf der Düse abgerundet. Am Auslauf der Düse, d. h. in Strömungsrichtung der Fluidströmung F auf den zweiten Abschnitt 162 folgend, schließt unmittelbar der dritte Abschnitt 163 bzw. der Diffusor an, dessen ebenfalls kreisrunde Querschnittsfläche A3, ausgehend von der Querschnittsfläche A2 des zweiten Abschnitts 162 über die mittlere Länge L3 des Diffusors kontinuierlich zunimmt. Die mittlere Länge L3 des Diffusors entspricht in etwa dem 1,7-fachen des Düsendurchmessers. Die genannten Abmessungen und Verhältnisse sind speziell für die Verwendung mit einem Ansaugpartikelerkennungssystem ausgelegt. Grundsätzlich sind für die erfindungsgemäße Partikeldetektionseinheit 100 aber auch andere Anwendungsfälle denkbar, wobei Geometrie und Abmessungen dann entsprechend angepasst werden können.

### Bezugszeichenliste

- 100: Partikeldetektionseinheit
- 110: Gehäuse
- 120: Detektionskammer
- 121: Strömungseinlass
- 122: Strömungsauslass
- 130: Lichtsender
- 140: Lichtempfänger
- 150: Drucksensor, insbesondere Differenzdrucksensor
- 151: erster Drucksensor, insbesondere Temperatur- und Luftdrucksensor
- 152: zweiter Drucksensor
- 160: Luftstromsensor
- 161: erster Abschnitt
- 162: zweiter Abschnitt
- 163: dritter Abschnitt
- 170: Leiterplatte
- 180: Steuerungsmodul

- 200: Ansaugpartikelerkennungssystem
- 210: Rohr- und/oder Schlauchleitung
- 211: Ansaugöffnung
- 220: Grundgerät
- 221: Leitungsanschluss
- 230: Strömungsmittel

- A1: erste Querschnittsfläche des ersten Abschnitts
- A2: zweite Querschnittsfläche des zweiten Abschnitts
- A3: dritte Querschnittsfläche des dritten Abschnitts
- DB: Detektionsbereich
- F: Fluidströmung
- L: Abstand der Druckabnahmepunkte des Differenzdrucksensors
- L2: Länge des zweiten Abschnitts
- L3: Länge des dritten Abschnitts

## Patentansprüche

1. Partikeldetektionseinheit (100), ausgebildet zur Verwendung mit einem Ansaugpartikelerkennungssystem (200), wobei die Partikeldetektionseinheit (100)
- ein Gehäuse (110) aufweist, mit einer davon begrenzten und von Umgebungslicht abgeschirmten Detektionskammer (120), die einen Strömungseinlass (121) zum Eintritt einer Fluidströmung (F) in die Detektionskammer (120) und einen Strömungsauslass (122) zum Austritt der Fluidströmung (F) aus der Detektionskammer (120) umfasst,
- einen Lichtsender (130) und einen Lichtempfänger (140), die derart zueinander ausgerichtet sind, dass ein Detektionsbereich (DB) zur Detektion von in der Fluidströmung (F) enthaltenen Partikeln durch Überlagerung des von dem Lichtsender (130) gesendeten Lichts und des Einfallsbereichs des Lichtempfängers (140) innerhalb der Detektionskammer (120) definiert ist, sowie
- einen Luftstromsensor (160), der mindestens einen Drucksensor (150, 151, 152) sowie mindestens einen ersten Abschnitt (161), einen zweiten Abschnitt (162) und eine Querschnittsverengung umfasst, wobei der erste Abschnitt (161) des Luftstromsensors (160) eine erste Querschnittsfläche (A1) und der zweite Abschnitt (162) eine zweite Querschnittsfläche (A2) aufweist, und wobei der mindestens eine Drucksensor (150, 151, 152) zur Messung einer zwischen dem ersten und dem zweiten Abschnitt (161, 162) vorliegenden Druckdifferenz ausgebildet ist,
**dadurch gekennzeichnet, dass**
der Luftstromsensor (160) innerhalb der Detektionskammer (120) und in Strömungsrichtung der Fluidströmung (F) nach dem Strömungseinlass (121) der Detektionskammer (120) sowie vor deren Strömungsauslass (122) angeordnet ist.

2. Partikeldetektionseinheit (100) nach Anspruch 1,
**dadurch gekennzeichnet, dass**
die Querschnittsverengung im ersten Abschnitt (161) oder im zweiten Abschnitt (162) des Luftstromsensors (160) ausgebildet ist, wobei die erste Querschnittsfläche (A1) eine von der zweiten Querschnittsfläche (A2) abweichende Größe aufweist.

3. Partikeldetektionseinheit (100) nach Anspruch 1 oder 2,
**dadurch gekennzeichnet, dass**
die Detektionskammer (120) einen an den Strömungseinlass (121) angrenzenden Eintrittskanal, einen an den Strömungsauslass (122) angrenzenden Austrittskanal sowie den dazwischenliegend angeordneten Detektionsbereich (DB) umfasst.

4. Partikeldetektionseinheit (100) nach Anspruch 3,
**dadurch gekennzeichnet, dass**
der Luftstromsensor (160) innerhalb des Eintrittskanals der Detektionskammer (120), in Strömungsrichtung der Fluidströmung (F) nach dem Strömungseinlass (121) und vor dem Detektionsbereich (DB) oder innerhalb des Austrittskanals der Detektionskammer (120), in Strömungsrichtung der Fluidströmung (F) nach dem Detektionsbereich (DB) und vor dem Strömungsauslass (122) angeordnet ist.

5. Partikeldetektionseinheit (100) nach einem der vorhergehenden Ansprüche,
**dadurch gekennzeichnet, dass**
der Luftstromsensor (160) einen in Strömungsrichtung der Fluidströmung (F) auf den zweiten Abschnitt (162) folgenden dritten Abschnitt (163) umfasst, wobei der zweite Abschnitt (162) als Düse mit gegenüber der Querschnittsfläche (A1) des ersten Abschnitts (161) geringerer Querschnittsfläche (A2) und der dritte Abschnitt (163) als Diffusor mit in Strömungsrichtung der Fluidströmung (F) kontinuierlich zunehmender Querschnittsfläche (A3) konstruiert ist.

6. Partikeldetektionseinheit (100) nach einem der vorhergehenden Ansprüche,
**dadurch gekennzeichnet, dass**
der mindestens eine Drucksensor (150) ein mit dem ersten Abschnitt (161) und dem zweiten Abschnitt (162) des Luftstromsensors (160) jeweils druckübertragend verbundener Differenzdrucksensor ist.

7. Partikeldetektionseinheit (100) nach Anspruch 6,
**dadurch gekennzeichnet, dass**
zwischen dem mindestens einen Drucksensor (150, 151, 152) und dem ersten Abschnitt (161) und/oder dem mindestens einen Drucksensor (150, 151, 152) und dem zweiten Abschnitt (162) des Luftstromsensors (160) jeweils eine druckübertragende Feststoffbarriere, insbesondere ein fluiddurchlässiger Filter oder eine fluidundurchlässige Membran angeordnet ist.

8. Partikeldetektionseinheit (100) nach einem der vorhergehenden Ansprüche,
**dadurch gekennzeichnet, dass**
die Partikeldetektionseinheit (100) eine mit dem Lichtsender (130) und dem Lichtempfänger (140) verbundene Leiterplatte (170) umfasst, wobei der mindestens eine Drucksensor (150, 151, 152) ebenfalls mit dieser Leiterplatte (170) verbunden ist.

9. Partikeldetektionseinheit (100) nach einem der vorhergehenden Ansprüche,
**dadurch gekennzeichnet, dass**
die Partikeldetektionseinheit (100) einen Temperatursensor zur Messung der in der Detektionskammer (120) vorliegenden Umgebungstemperatur und/oder einen Luftdrucksensor (151) zur Messung des in der Detektionskammer (120) vorliegenden Umgebungsdrucks aufweist.

10. Partikeldetektionseinheit (100) nach einem der vorhergehenden Ansprüche,
**dadurch gekennzeichnet, dass**
der mindestens eine Drucksensor (150, 151, 152) des Luftstromsensors (160) signalübertragend mit einem Steuerungsmodul (180) verbunden ist, wobei das Steuerungsmodul (180) zur Ermittlung des Volumenstroms der Fluidströmung (F) anhand der gemessenen Druckdifferenz konfiguriert ist.

11. Partikeldetektionseinheit (100) nach einem der Ansprüche 9 oder 10,
**dadurch gekennzeichnet, dass**
der Temperatursensor und/oder der Luftdrucksensor (151) signalübertragend mit dem Steuerungsmodul (180) verbunden ist, wobei das Steuerungsmodul (180) für die Ermittlung des Volumenstroms der Fluidströmung (F) zur Kompensation des Einflusses der in der Detektionskammer (120) vorliegenden Umgebungstemperatur und/oder des Einflusses des dortigen Umgebungsdrucks konfiguriert ist.

12. Partikeldetektionseinheit (100) nach einem der Ansprüche 10 oder 11,
**dadurch gekennzeichnet, dass**
das Steuerungsmodul (180) eine Speichereinheit zur Hinterlegung eines vorgebbaren Soll-Volumenstroms oder eines vorgebbaren Soll-Volumenstrombereichs umfasst und zur Erkennung von Abweichungen des ermittelten Volumenstroms von dem vorgegebenen Soll-Volumenstrom oder dem vorgegebenen Soll-Volumenstrombereich konfiguriert ist.

13. Partikeldetektionseinheit (100) nach Anspruch 12,
**dadurch gekennzeichnet, dass**
das Steuerungsmodul (180) zur Ausgabe einer auf Undichtigkeiten und/oder Verstopfungen jeweiliger Rohr- und/oder Schlauchleitungen (210) eines die Partikeldetektionseinheit (100) verwendenden Ansaugpartikelerkennungssystems (200) hinweisenden Meldung, basierend auf einer erkannten Abweichung von dem vorgegebenen Soll-Volumenstrom oder dem vorgegebenen Soll-Volumenstrombereich konfiguriert ist.

14. Ansaugpartikelerkennungssystem (200), insbesondere Ansaugbranderkennungssystem zum Erkennen eines Brandes und/oder einer Brandentstehung, aufweisend
- mindestens eine Rohr- und/oder Schlauchleitung (210), die über eine oder mehrere Ansaugöffnungen (211) zur jeweiligen Entnahme einer Fluidprobe in einen oder mehrere Überwachungsbereiche mündet,
- ein Strömungsmittel (230), das zur Erzeugung einer Fluidströmung (F) entlang der mindestens einen Rohr- und/oder Schlauchleitung (210) fluidleitend mit dieser verbunden ist,
- mindestens eine Partikeldetektionseinheit (100) mit einem Lichtsender (130) und einem Lichtempfänger (140) zur Detektion von in der Fluidströmung (F) enthaltenen Partikeln sowie mit einer von einem Gehäuse (110) begrenzten Detektionskammer (120), die einen Strömungseinlass (121) zum Eintritt der Fluidströmung (F) in die Detektionskammer (120) und einen Strömungsauslass (122) zum Austritt der Fluidströmung (F) aus der Detektionskammer (120) aufweist, sowie
- einen Luftstromsensor (160), der mindestens einen Drucksensor (150, 151, 152) sowie mindestens einen ersten Abschnitt (161), einen zweiten Abschnitt (162) und eine Querschnittsverengung umfasst, wobei der erste Abschnitt (161) eine erste Querschnittsfläche (A1) und der zweite Abschnitt (162) eine zweite Querschnittsfläche (A2) aufweist, und wobei der mindestens eine Drucksensor (150, 151, 152) zur Messung einer zwischen dem ersten und dem zweiten Abschnitt (161, 162) vorliegenden Druckdifferenz ausgebildet ist, **dadurch gekennzeichnet, dass**
der Luftstromsensor (160) innerhalb der Detektionskammer (120) und in Strömungsrichtung der Fluidströmung (F) nach dem Strömungseinlass (121) der Detektionskammer (120) sowie vor deren Strömungsauslass (122) angeordnet ist.

15. Ansaugpartikelerkennungssystem (200) nach Anspruch 14,
**dadurch gekennzeichnet, dass**
jeder Rohr- und/oder Schlauchleitung (220) des Ansaugpartikelerkennungssystems (200) eine jeweilige Partikeldetektionseinheit (100) mit integriertem Luftstromsensor (160) zur rohr- und/oder schlauchleitungsspezifischen Überwachung der Fluidströmung (F) zugeordnet ist.

16. Ansaugpartikelerkennungssystem (200) nach einem der Ansprüche 14 oder 15, **dadurch gekennzeichnet, dass**
die Querschnittsverengung im ersten Abschnitt (161) oder im zweiten Abschnitt (162) des Luftstromsensors (160) ausgebildet ist, wobei die erste Querschnittsfläche (A1) eine von der zweiten Querschnittsfläche (A2) abweichende Größe aufweist, und die jeweilige Größe der ersten und/oder der zweiten Querschnittsfläche (A1, A2) des Luftstromsensors (160) an den durch das Strömungsmittel (230) erzeugten Volumenstrom oder Volumenstrombereich, mit dem die Fluidströmung (F) die Detektionskammer (120) durchströmt, angepasst ist.
